# EUROPÄISCHE PATENTSCHRIFT

(11) **EP 3 259 486 B1**
(45) Veröffentlichungstag und Bekanntmachung des Hinweises auf die Patenterteilung: **08.05.2019**
(21) Anmeldenummer: 16708591.9
(22) Anmeldetag: 26.01.2016
(51) Int. Cl.: F16D 28/00, F16H 25/22, F16D 29/00, F16D 23/12, F16H 25/20, H02K 7/06

(54) **AKTOR MIT PLANETENWÄLZGEWINDESPINDELTRIEB**
ACTUATOR WITH PLANETARY ROLLING THREADED SPINDLE DRIVE
ACTIONNEUR PRÉSENTANT UN MÉCANISME À BROCHE FILETÉE À SATELLITES

(30) Priorität: 17.02.2015 DE 102015202827
(43) Veröffentlichungstag der Anmeldung: 27.12.2017
(73) Patentinhaber: Schaeffler Technologies AG & Co. KG, 91074 Herzogenaurach (DE)
(72) Erfinder: EHRLICH, Matthias, 77815 Bühl (DE); FRANZ, Viktor, 76137 Karlsruhe (DE); HEYNE, Marko, 77830 Bühlertal (DE); RUDY, Dietmar, 66501 Kleinbundenbach (DE); KELLER, Peter, 66892 Bruchmühlbach-Miesau (DE)
(86) Internationale Anmeldenummer: PCT/DE2016/200042
(87) Internationale Veröffentlichungsnummer: WO 2016/131449

(56) Entgegenhaltungen:
- DE-A1- 19 511 287
- DE-A1-102013 201 473
- DE-A1-102014 206 956

## Beschreibung

In den vergangenen Jahren haben sich automatisierte Kupplungen immer mehr verbreitet. Komfort und Sicherheit werden zunehmend durch den Einsatz von Sensorik und elektronisch initiierten Eingriffen in den Fahrverlauf erhöht.

Aus der Fahrzeugtechnik ist bekannt, dass zum Ansteuern einer Kupplung bei einem automatisierten Getriebe zumindest ein Kupplungsaktor verwendet wird. Wenn bei dem Kupplungsaktor keine absolute Wegmessung verwendet wird, kann eine Inkrementalwegmessung vorgesehen sein, welche entsprechend Inkrementalwegmesssensoren aufweist. Bei der Verwendung von so genannten EC-Motoren sind diese Inkrementalwegmesssensoren direkt in die Motoren integriert.

Es hat sich gezeigt, dass die Inkrementalwegmessung regelmäßig abgeglichen werden sollte. Bei dem Abgleich der Inkrementalwegmessung kann ein Kalibrationspunkt tastend angefahren werden, wobei die Position des Kalibrationspunktes als Nullpunkt oder Kupplungsreferenzposition zum Abgleich der Inkrementalwegmessung verwendet wird.

Die DE 102005028844 B4 offenbart ein Verfahren zur Steuerung einer mittels einer bestrombaren Kupplungsaktorik betätigbaren, nicht selbsthaltenden Kupplung zwischen einer Antriebseinheit und einem Getriebe, mit einer Steuereinrichtung, mittels derer eine Steuerung der Kupplungsaktorik und eine Erfassung von Messdaten eines Sensors zur Ermittlung einer Kupplungsposition erfolgt, wobei zur Verifizierung einer Kupplungsreferenzposition die Kupplungsaktorik für einen vorgegebenen ersten Passiv-Zeitraum oder bis zum Auftreten eines Aktorstillstandes stromlos geschaltet wird und danach die erreichte Kupplungsposition in einer ersten Messung ermittelt wird und für einen vorgegebenen Aktiv-Zeitraum eine Bestromung der Kupplungsaktorik erfolgt und die Kupplungsaktorik anschließend für einen vorgegebenen weiteren Passiv-Zeitraum oder bis zum Auftreten eines Aktorstillstandes erneut stromlos geschaltet wird und danach in einer weiteren Messung die Kupplungsposition bestimmt und anschließend überprüft wird, ob die zuletzt gemessene Kupplungsposition als neue Kupplungsreferenzposition verifiziert werden kann, indem festgestellt wird, ob die in der letzten und in der vorausgegangenen Messung bestimmten Kupplungspositionen übereinstimmen oder innerhalb eines plausiblen Wertebereiches für die Kupplungsreferenzposition liegen.

Dabei gilt der Referenzierpunkt als gefunden, wenn eine durch ein Antriebsmoment in Bewegung versetzte Spindel durch einen mechanischen Widerstand zum Stillstand kommt. Um falsche mechanische Widerstände (z.B. Schmutz) auszuschließen, wird empfohlen den Referenzierpunkt über eine Plausibilisierstrategie abzusichern. Der Einsatz eines steigungstreuen Spindeltriebes wird empfohlen. Ein solcher steigungstreuer Spindeltrieb ist beispielsweise eine Planetenwälzgetriebe (PWG).

Planetenwälzgetriebe (PWG) (auch bezeichnet als Planetenwälzgewindespindeltriebe) sind seit vielen Jahren Stand der Technik und werden beispielsweise in DD 0277308 A5 beschrieben. Aus der Druckschrift DE 10 2010 047 800 A1 ist beispielsweise ein Planetenwälzgewindetrieb bekannt, der in einem Hydrostataktor in Form eines hydrostatischer Kupplungsaktors enthalten ist, um eine mittels eines Elektromotors erzeugte Drehbewegung in eine Axialbewegung umzuwandeln. Ein Planetenwälzgewindetrieb, mit einer Gewindespindel, und mit einer auf der Gewindespindel angeordneten Mutter, und mit mehreren über den Umfang verteilten, zwischen der Gewindespindel und der Mutter angeordneten Planeten, die am Innenumfang der Mutter sowie am Außenumfang der Gewindespindel abwälzbar angeordnet sind, ist aus der Druckschrift DE 10 2010 011 820 A1 bekannt. Bei dieser Lösung ist eine Vorspanneinrichtung für die Planeten vorgesehen, wobei die Mutter zwei axial zueinander bewegliche Mutterteile aufweist, und wobei die Vorspanneinrichtung ein gegen das eine Mutterteil angefedertes Federelement aufweist. Die Mutter übernimmt zwei Funktionen: einerseits ist sie Getriebeteil und andererseits ist sie Teil der Vorspanneinrichtung.

Aus der nachveröffentlichten Druckschrift DWO 2015/081951 A1 ist weiterhin ein PWG bekannt, bei welchem mittels eines Federpaketes und eines Drehwinkelgebers am Rotor oder an der Spindel eine Lagebestimmung vorgenommen werden kann.

Aus der Druckschrift DE 10 2013 201473 A1 ist weiterhin ein Aktor mit Planetenwälzgewindespindeltrieb (PWG) bekannt, wobei Mittel zur Bestimmung einer Referenzposition der axial beweglichen Komponente integriert sind, wobei die Mittel zur Bestimmung der Referenzposition der axial beweglichen Komponente einen Winkelsensor zur Bestimmung einer Winkeländerung der Spindel enthalten.

Aufgabe der vorliegenden Erfindung ist es, eine konstruktive Anordnung eines für die Referenzierung notwendigen Anschlages zur Verfügung zu stellen.

Diese Aufgabe wird mit den Merkmalen des ersten und zehnten Schutzanspruchs gelöst. Vorteilhafte Ausgestaltungen ergeben sich aus den Unteransprüchen.

Die Erfindung betrifft einen Aktor mit Planetenwälzgewindespindeltrieb (PWG), welcher insbesondere für die Betätigung einer Kupplung eines Fahrzeuges mittels eines axial bewegbaren Kolbens eingesetzt wird, wobei mit einer Spindel mehrere Planetenrollen in Eingriff stehen, die mit einem die Planetenrollen umringenden Hohlrad kämmen, wobei die Planetenrollen achsparallel zur Spindel verlaufen und in einem Planetenrollenträger drehbar um ihre eigene Längsachse positioniert sind und wobei der Aktor wenigstens eine axial bewegliche Komponente zur Realisierung einer Ausrückbewegung aufweist, welche entweder die Spindel oder das Getriebegehäuse ist, und wobei Mittel zur Bestimmung einer Referenzposition der axial beweglichen Komponente integriert sind, und wobei weiterhin die Mittel zur Bestimmung der Referenzposition der axial beweglichen Komponente eine Anschlagfeder und einen Winkelsensor zur Bestimmung einer Winkeländerung der Spindel enthalten.

Es kann insbesondere vorgesehen sein, dass die Anschlagfeder zumindest mit dem Hohlrad bewegungsgekoppelt ist.

Bevorzugt ist die Anschlagfeder eine Tellerfeder oder Schraubendruckfeder oder Rohrfeder oder Blattfeder.

Die Anschlagfeder kann am Spindelende oder im Getriebegehäuse des Planetenwälzgetriebes angeordnet sein.

Insbesondere kann sich die Anschlagfeder zwischen einem Axiallager des Planetenwälzgetriebes, insbesondere im Bereich der Planetenrollen und einem Ende der Spindel, genauer einem Anschlagsbereich im Bereich des Endes der Spindel oder im Bereich des Endes des Planetenwälzgetriebes befinden. Dieser Bereich kann insbesondere entgegengesetzt zum Bereich des Getriebes angeordnet sein, welcher den Motor, d.h. den E-Motor zum Antreiben der Spindel aufweist.

Die Anschlagfeder kann dabei zwischen einem Lagerring und einem Wälzlager oder ähnlichem Lager angeordnet sein, wo dieses weitere Lager die Anschlagfeder von der Drehbewegung der Spindel entkoppelt.

Insbesondere ist eine Anschlagscheibe an einer Position angeordnet, welche in Bezug auf die axial unbewegliche Komponente in axialer Richtung festgelegt ist.

In einer bevorzugten Ausführungsform ist die axial unbewegliche Komponente die Spindel und die axial bewegliche Komponente das Getriebegehäuse, enthaltend die Planetenrollen, das Hohlrad, die Axialkugellager und den Planetenrollenträger. Durch ein vom Rotor in die Spindel eingeleitetes Antriebsmoment werden die Planetenrollen axial in Richtung Anschlagscheibe bewegt.

Bei einer axialen Bewegung der axial beweglichen Komponente in Richtung der Anschlagscheibe tritt dabei ein in axialer Richtung zwischen Anschlagscheibe und Anschlagfeder angeordnetes Nadellager mit der Anschlagscheibe in Kontakt, wodurch sich das Drehmoment erhöht.

Bevorzugt bewirkt dabei eine weitere axiale Bewegung des Planetenwälzgewindespindeltriebes in Richtung der Anschlagscheibe nach Kontaktierung von Anschlagscheibe und Nadellager eine Auslenkung der Anschlagfeder.

Die Anschlagfeder wird soweit verformt, bis sich ein Gleichgewicht zwischen dem eingeleiteten Antriebsmoment und dem durch die Verformung der Anschlagfeder verursachten Widerstandsmoment einstellt.

In einer weiteren bevorzugten Ausführungsform ist eine Vorspannfeder seriell zur Anschlagfeder angeordnet. Vorteilhafterweise kann bei der seriellen Anordnung von Vorspannfeder und Anschlagfeder eine einfachere Einstellung der Vorspannkraft für die Planetenwälzgewindespindel erfolgen, da die Gesamtsteifigkeit sich maßgeblich nach der weichsten Feder, also der Vorspannfeder richtet. Gegenüber der parallelen Anordnung lässt sich die Vorspannfeder in diesem Fall deutlich weicher gestalten aufgrund des hier besseren Bauraumangebotes für die Vorspannfeder.

Alternativ ist eine Vorspannfeder parallel zur Anschlagfeder angeordnet. Vorteilhafterweise ist für diese Anordnung keine zusätzliche Lagerstelle notwendig.

Die Kennlinie des Anschlages lässt sich durch Vorspannung der Anschlagfeder, der Steifigkeit der Anschlagfeder und dem Aufbau beeinflussen. Nähere Erläuterungen dazu finden sich in den Ausführungsbeispielen.

Zur Begrenzung der Komprimierung der Anschlagfeder kann innerhalb eines Anschlaggehäuses eine zusätzliche Anschlaghülse in direktem Wirkkontakt mit der Anschlagfeder angeordnet sein.

Bei Anschlag der Anschlagscheibe mit dem Nadellager kann eine Entkopplung der Drehbewegung zwischen der Spindel und den Planetenrollen erfolgen. Diese Entkopplung kann beispielsweise über verschiedene Lager oder über eine örtliche Trennung erfolgen. Eine Entkopplung über verschiedene Lager kann beispielsweise über ein Gleitlager zwischen Hülse und Axialkugellagerscheibe der Planetenrollen oder über ein Nadellager zwischen Axiallager und Anschlagfeder realisiert werden.

Besonders vorteilhaft an der erfindungsgemäßen Konstruktion sind ein kurzer Kraftfluss und dadurch eine Minimierung der der Anzahl der belasteten Teile und eine günstige Belastung, vorzugsweise Druck- anstelle einer Biegebelastung.

Ebenfalls erfindungsgemäß ist ein Verfahren zur Bestimmung einer Referenzposition einer axial beweglichen Komponente eines Aktors mit Planetenwälzgewindespindeltrieb (PWG), insbesondere für die Betätigung einer Kupplung eines Fahrzeuges mittels eines axial bewegbaren Kolbens, enthaltend die folgenden Schritte:
a. Messung eines in den Aktor eingeleiteten Antriebsmomentes und eines durch Verformung einer Anschlagfeder verursachten Widerstandsmomentes,
b. Erfassung des Drehwinkels der Spindel mittels eines an einem axialen Ende der Spindel angeordneten Winkelsensors,
c. Erfassen des Gleichgewichtspunktes zwischen eingeleitetem Antriebsmoment und durch Verformung der Anschlagfeder verursachten Widerstandsmoment,
wobei die Schritte a bis c in beliebiger Reihenfolge oder gleichzeitig erfolgen können.

Die Erfindung wird nachfolgend an einem Ausführungsbeispiel und zugehörigen Zeichnungen näher erläutert.

Es zeigen:
- Figur 1: Schnittdarstellung eines erfindungsgemäßen Aktors mit Planetenwälzgewindespindeltrieb,
- Figur 2: Schnittdarstellung eines Planetenwälzgewindespindeltriebes mit Anschlag,
- Figur 3: Schnittdarstellung eines Planetenwälzgewindespindeltriebes mit einer Entkopplung der Drehbewegung zwischen Hülse und Axialkugellager,
- Figur 4: Schnittdarstellung eines Planetenwälzgewindespindeltriebes mit einer Entkopplung der Drehbewegung zwischen Axiallager und Anschlagfeder mittels Nadellager,
- Figur 5: Schnittdarstellung eines Planetenwälzgewindespindeltriebes mit einem Anschlag am Spindelende,
- Figur 6: Schnittdarstellung eines Planetenwälzgewindespindeltriebes mit einer seriell zur Vorspannfeder angeordneten Anschlagfeder,
- Figur 7: Schnittdarstellung eines Planetenwälzgewindespindeltriebes mit einer parallel zur Vorspannfeder angeordneten Anschlagfeder,
- Figur 8: Schnittdarstellung und charakteristische Kennlinie eines Planetenwälzgewindespindeltriebes mit einem kraftfreien Anschlag,
- Figur 9: Schnittdarstellung und charakteristische Kennlinie eines Planetenwälzgewindespindeltriebes mit einem vorgespannten Anschlag,
- Figur 10: Schnittdarstellung und charakteristische Kennlinie eines Planetenwälzgewindespindeltriebes mit einem vorgespannten Anschlag und einer zusätzlichen Anschlaghülse.

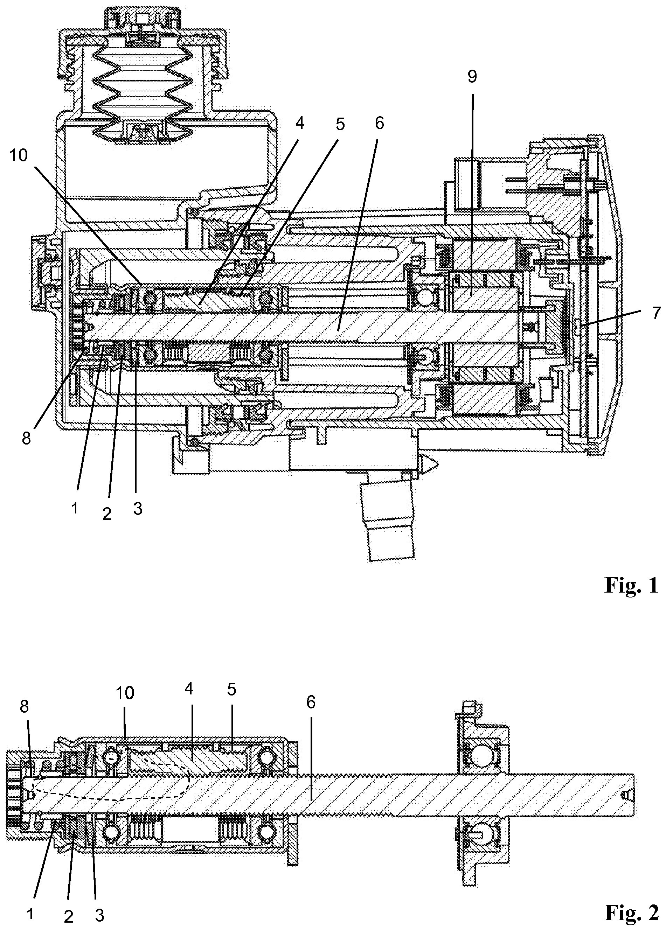

In Figur 1 ist ein erfindungsgemäßer Aktor mit Planetenwälzgewindespindeltrieb im Längsschnitt dargestellt. Der Rotor leitet ein Antriebsmoment in die Spindel 6 ein, welche in der hier dargestellten Ausführungsform axial unbeweglich gelagert ist. Mit der Spindel 6 stehen mehrere Planetenrollen 4 in Eingriff, die mit einem die Planetenrollen 4 umringenden Hohlrad 5 kämmen, wobei die Planetenrollen 4 in einem Planetenrollenträger drehbar um ihre eigene Längsachse positioniert sind. An der Spindel 6 ist eine in Bezug auf die Spindel 6 in axialer Richtung festgelegte und in ihrer Position unveränderliche Anschlagscheibe 1 angeordnet. Zwischen Anschlagscheibe 1 und Axiallager der Planetenrollen 4 befinden sich ein in Bezug auf die Spindel 6 in axialer Richtung bewegliches Nadellager 2 und eine ebenfalls in axialer Richtung bewegliche Anschlagfeder 3. Seriell zur Anschlagfeder 3 ist zudem eine Vorspannfeder 8 angeordnet. Durch die Einleitung eines Antriebsmomentes bewegen sich die Planetenrollen 4 samt Getriebegehäuse, hier die Hülse 10 nach links, also in Richtung Öffnen bzw. Druckabbau. Sobald das Nadellager 2 in Kontakt mit der Anschlagscheibe 1 kommt, wird die Anschlagfeder 3 verformt. Die Anschlagfeder 3 wird soweit verformt bis sich ein Gleichgewicht zwischen dem eingeleiteten Antriebsmoment und dem durch die Verformung der Anschlagfeder 3 verursachten Widerstandsmoment einstellt. Wird an diesem Gleichgewichtspunkt die von einem am Spindelende angebrachten Winkelsensor 7 erfasster Winkel der Spindel 6 als plausibel registriert, so ist der Referenzierpunkt gefunden.

Figur 2 zeigt eine Schnittdarstellung eines Planetenwälzgewindespindeltriebes mit Anschlag. Neben den zu Figur 1 beschriebenen Sachverhalten ist der Kraftfluss als gestrichelte Linie dargestellt. Bei Einleitung eines Antriebsmomentes wird dieses von der Spindel 6 auf die Planetenrollen 4 übertragen. Von den Planetenrollen 4 wird das Drehmoment in eine axiale Kraft umgewandelt und über das Axiallager auf Anschlagfeder 3, Nadellager 2 und Anschlagscheibe 1 übertragen. Es kommt zu einer axialen Bewegung der Hülse 10 samt der in ihr enthaltenen Komponenten in Richtung der Anschlagscheibe 1. Sobald das Nadellager 2 in Kontakt mit der Anschlagscheibe 1 kommt, wird die Anschlagfeder 3 verformt bis sich ein Gleichgewicht zwischen dem eingeleiteten Antriebsmoment und dem durch die Verformung der Anschlagfeder 3 verursachten Widerstandsmoment einstellt. Die Störeinflüsse können in der dargestellten Ausführungsform auf ein Minimum reduziert werden. Einerseits wird dazu die aus dem Widerstandsmoment resultierende Axialkraft über ein Wälzlager (Nadellager 2) auf die Anschlagscheibe 1 übertragen. Andererseits kann die Steifigkeit der Anschlagfeder 3 so hoch gewählt sein, dass eine Abweichung des Antriebsmomentes zu einer zulässig kleinen Referenzpunktverschiebung führt und die mechanische Belastung durch das Auftreten von Trägheitskräften im Anschlagsfall noch ertragbar ist.

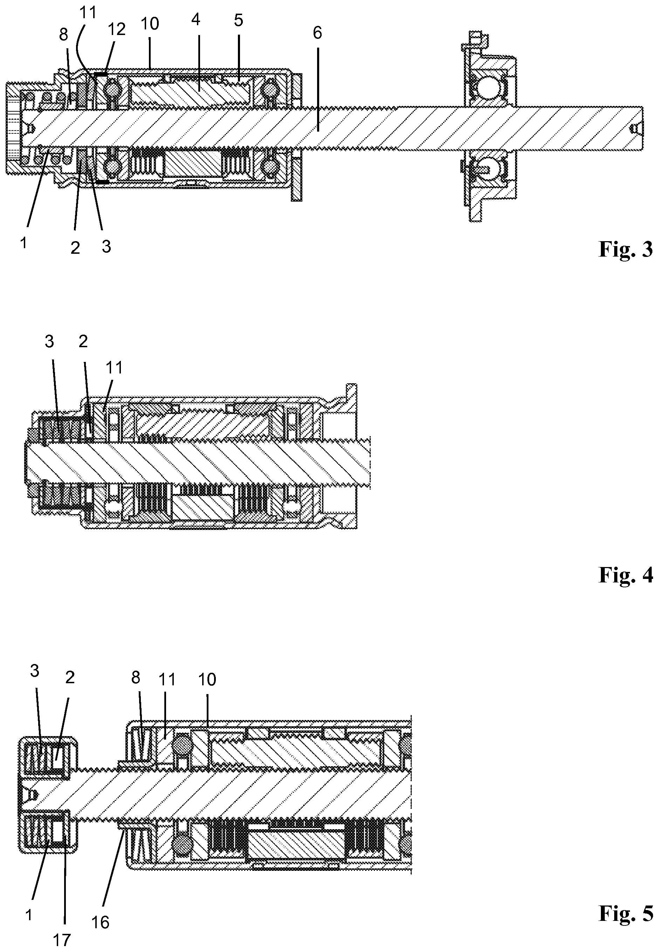

In den Figuren 3 bis 5 sind verschiedene Möglichkeiten der Entkopplung der Drehbewegung zwischen Spindel 6 und Planetenrollen 4 im Anschlagsfall dargestellt. Diese Entkopplung kann örtlich, wie auch durch ihre Art erfolgen.

Figur 3 zeigt eine Schnittdarstellung des in Figur 2 beschriebenen Planetenwälzgewindespindeltriebes mit einer Entkopplung der Drehbewegung zwischen Hülse 10 und Axialkugellager. Dabei ist zwischen Hülse 10 und Axialkugellagerscheibe 11 ein Gleitlager 12 angeordnet.

In der in Figur 4 dargestellten Ausführungsform erfolgt die Entkopplung der Drehbewegung zwischen Axialkugellagerscheibe 11 und Anschlagfeder 3 im Anschlagsfall mittels eines Nadellagers 2.

Gemäß Figur 5 erfolgt eine örtliche Entkopplung der Drehbewegung im Anschlagsfall. Dabei sind Anschlagscheibe 1, Anschlagfeder 3 und Nadellager 2 am Spindelende angeordnet. Mittels einer Vorspannfeder 8 wird die Hülse 10 immer mitbewegt und eine Umgriffshülse 16 immer an die Axialkugellagerscheibe 11 gepresst. Im Anschlagsfall kommt die Umgriffshülse 16 mit der Nadellagerscheibe 17 in Kontakt. Es entsteht ein Widerstandsmoment. Die Nadellagerscheibe 17 wird so weit axial verschoben bis sie mit der Anschlagscheibe 1 in Kontakt tritt.

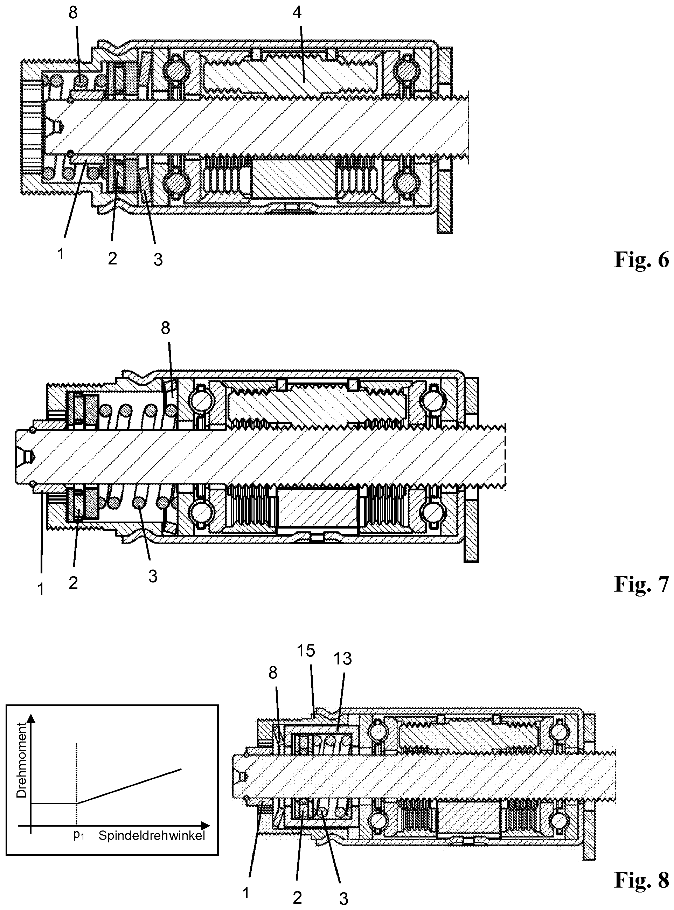

Die Anschlagfeder kann, wie in Figur 6 und 7 dargestellt, seriell oder parallel zur Vorspannfeder angeordnet werden.

Figur 6 zeigt eine Schnittdarstellung eines Planetenwälzgewindespindeltriebes mit einer seriell zur Vorspannfeder 8 angeordneten Anschlagfeder 3. Vorteil der seriellen Anordnung ist die Möglichkeit zum einfacheren Einstellen der Vorspannkraft für die Planetenrollen 4, da hier durch den größeren Bauraum für die Vorspannfeder, diese weich ausgelegt werden kann. Die Gesamtsteifigkeit wird sich maßgeblich nach der weichsten Feder also der Vorspannfeder richtet.

Figur 7 zeigt eine Schnittdarstellung eines Planetenwälzgewindespindeltriebes mit einer parallel zur Vorspannfeder 8 angeordneten Anschlagfeder 3.

Die Kennlinie des Anschlages lässt sich durch Vorspannung der Anschlagfeder, der Steifigkeit der Anschlagfeder und dem Aufbau beeinflussen. Diese Variationsmöglichkeiten werden in den Figuren 8 bis 10 anhand von drei charakteristischen Kennlinien und der dazugehörigen konstruktiven Ausführung erläutert. Dabei beginnt das Drehmoment in allen drei Ausführungsbeispielen bei größer Null, da das Reibmoment im Planetenwälzgewindespindeltrieb nach Einleitung eines Antriebsmomentes immer wirkt. Der Punkt p1 kennzeichnet in allen drei Figuren 8 bis 10 den Moment, in dem Anschlagscheibe 1 und Nadellager 2 in Kontakt treten und ab dem sich das Drehmoment erhöht. Nadellager 2 und Anschlagfeder 3 sind in allen drei Ausführungsformen von einem Anschlaggehäuse 13 umgeben, welches radial durch eine Spielpassung an der Kolbenaufnahme 15 befestigt ist. Anschlaggehäuse 13 und Vorspannfeder 8 besitzen dabei zentrale Aussparungen, durch die die Anschlagscheibe 1 dringen kann, bevor sie mit dem Nadellager 2 in Kontakt tritt.

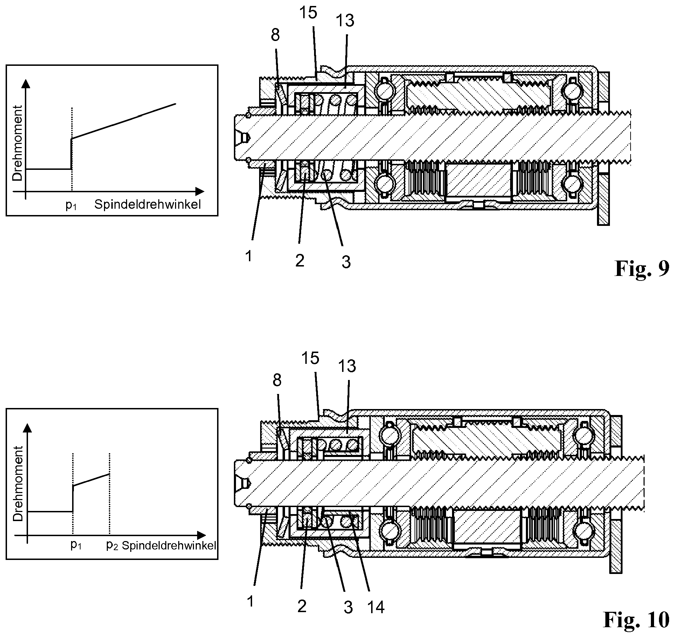

In Figur 8 sind eine Schnittdarstellung und die dazugehörige charakteristische Kennlinie eines Planetenwälzgewindespindeltriebes mit einem kraftfreien Anschlag dargestellt. Wenn bei einem gewissen Spindeldrehwinkel p1 die Anschlagscheibe 1 mit dem Nadellager 2 in Kontakt tritt, so beginnt bei weiterer axialer Bewegung der axial beweglichen Komponenten eine Auslenkung der Anschlagfeder 3. Von diesem Punkt an steigt das Drehmoment kontinuierlich an. Die Figur 9 zeigt eine Schnittdarstellung und die zugehörige charakteristische Kennlinie eines Planetenwälzgewindespindeltriebes mit einem vorgespannten Anschlag. Bei einem vorgespannten Anschlag erhöht sich das Drehmoment an der Position p1 sprunghaft ausgehend vom Reibmoment und steigt dann kontinuierlich weiter an.

Figur 10 zeigt eine Schnittdarstellung und die zugehörige charakteristische Kennlinie eines Planetenwälzgewindespindeltriebes mit einem vorgespannten Anschlag und einer zusätzlichen Anschlaghülse 14. Bei einem vorgespannten Anschlag mit einer zusätzlichen Anschlaghülse 14 erhöht sich das Drehmoment an der Position p1 sprunghaft ausgehend vom Reibmoment, steigt dann während der Phase der Komprimierung der Anschlagfeder 3, kontinuierlich weiter bis die Anschlaghülse 14 in den Kontakt mit dem Nadellager 2 kommt (Position p2). Die Anschlaghülse 14 sorgt weiterhin für einen definierten Endanschlag, ohne dass die Anschlagfeder 3 zwangsläufig komplett komprimiert werden muss.

### Bezugszeichenliste

- 1: Anschlagscheibe
- 2: Nadellager
- 3: Anschlagfeder
- 4: Planetenrollen
- 5: Hohlrad
- 6: Spindel
- 7: Winkelsensor
- 8: Vorspannfeder
- 9: Rotor
- 10: Hülse
- 11: Axialkugellagerscheibe
- 12: Gleitlager
- 13: Anschlaggehäuse
- 14: Anschlaghülse
- 15: Kolbenaufnahme
- 16: Umgriffshülse
- 17: Nadellagerscheibe

## Patentansprüche

1. Aktor mit Planetenwälzgewindespindeltrieb (PWG), insbesondere für die Betätigung einer Kupplung eines Fahrzeuges mittels eines axial bewegbaren Kolbens, wobei mit einer Spindel (6) mehrere Planetenrollen (4) in Eingriff stehen, die mit einem die Planetenrollen (4) umringenden Hohlrad (5) kämmen, wobei die Planetenrollen (4) achsparallel zur Spindel (6) verlaufen und in einem Planetenrollenträger drehbar um ihre eigene Längsachse positioniert sind und wobei der Aktor wenigstens eine axial bewegliche Komponente zur Realisierung einer Ausrückbewegung aufweist, welche entweder die Spindel (6) oder ein Getriebegehäuse (10) ist, und wobei Mittel zur Bestimmung einer Referenzposition der axial beweglichen Komponente integriert sind, und wobei weiterhin die Mittel zur Bestimmung der Referenzposition der axial beweglichen Komponente eine Anschlagfeder (3) und einen Winkelsensor (7) zur Bestimmung einer Winkeländerung der Spindel (6) enthalten.

2. Aktor nach Anspruch 1, **dadurch gekennzeichnet, dass** eine Anschlagscheibe (1) an einer Position angeordnet ist, welche in Bezug auf die axial unbewegliche Komponente in axialer Richtung festgelegt ist.

3. Aktor nach einem der Ansprüche 1 oder 2, **dadurch gekennzeichnet, dass** eine Anschlagscheibe (1) an einer Position angeordnet ist, welche in Bezug auf die Spindel (6) in axialer Richtung festgelegt ist.

4. Aktor nach einem der Ansprüche 1 bis 3, **dadurch gekennzeichnet, dass** bei einer axialen Bewegung der axial beweglichen Komponente in Richtung der Anschlagscheibe (1) ein in axialer Richtung zwischen Anschlagscheibe (1) und Anschlagfeder (3) angeordnetes Nadellager (2) mit der Anschlagscheibe (1) in Kontakt tritt.

5. Aktor nach Anspruch 4, **dadurch gekennzeichnet, dass** eine weitere axiale Bewegung der axial beweglichen Komponente in Richtung der Anschlagscheibe (1) nach Kontaktierung von Anschlagscheibe (1) und Nadellager (2) eine Auslenkung der Anschlagfeder (3) bewirkt.

6. Aktor nach einem der Ansprüche 1 bis 5, **dadurch gekennzeichnet, dass** die Anschlagfeder (3) eine Tellerfeder oder Schraubendruckfeder oder Rohrfeder oder Blattfeder ist.

7. Aktor nach einem der Ansprüche 1 bis 6, **dadurch gekennzeichnet, dass** eine Vorspannfeder (8) seriell oder parallel zur Anschlagfeder (3) angeordnet ist.

8. Aktor nach einem der Ansprüche 1 bis 7, **dadurch gekennzeichnet, dass** innerhalb eines Anschlaggehäuses (13) eine Anschlaghülse (14) in Wirkverbindung mit der Anschlagfeder (3) zur Begrenzung der Komprimierung der Anschlagfeder (3) angeordnet ist.

9. Aktor nach Anspruch 4 und einem der Ansprüche 5 bis 8, **dadurch gekennzeichnet, dass** bei Anschlag der Anschlagscheibe (1) mit dem Nadellager (2) eine Entkopplung der Drehbewegung zwischen der Spindel (6) und den Planetenrollen (4) erfolgen kann.

10. Verfahren zur Bestimmung einer Referenzposition einer axial beweglichen Komponente eines Aktors mit Planetenwälzgewindespindeltrieb (PWG), insbesondere für die Betätigung einer Kupplung eines Fahrzeuges mittels eines axial bewegbaren Kolbens, enthaltend die folgenden Schritte:
a. Messung eines in den Aktor eingeleiteten Antriebsmomentes und eines durch Verformung einer Anschlagfeder (3) verursachten Widerstandsmomentes,
b. Erfassung des Drehwinkels der Spindel (6) mittels eines an einem axialen Ende der Spindel (6) angeordneten Winkelsensors (7),
c. Erfassen des Gleichgewichtspunktes zwischen eingeleitetem Antriebsmoment und durch Verformung der Anschlagfeder verursachten Widerstandsmoment,
wobei die Schritte a bis c in beliebiger Reihenfolge oder gleichzeitig erfolgen können.

## Claims

1. Actuator having a planetary roller spindle drive (PWG), in particular for the actuation of a clutch of a vehicle by means of an axially movable piston, a plurality of planetary rollers (4) being in engagement with a spindle (6), which planetary rollers (4) mesh with an internal gear (5) which surrounds the said planetary rollers (4), the planetary rollers (4) running in an axially parallel manner with respect to the spindle (6) and being positioned in a planetary roller carrier such that they can be rotated about their own longitudinal axis, and the actuator having at least one axially movable component for realising a disengaging movement, which component is either the spindle (6) or a gear housing (10), and means for determining a reference position of the axially movable component being integrated, and, furthermore, the means for determining the reference position of the axially movable component comprising a stop spring (3) and an angle sensor (7) for determining an angle change of the spindle (6).

2. Actuator according to Claim 1, **characterized in that** a stop washer (1) is arranged at a position which is fixed in the axial direction in relation to the axially immovable component.

3. Actuator according to either of Claims 1 and 2, **characterized in that** a stop washer (1) is arranged at a position which is fixed in the axial direction in relation to the spindle (6).

4. Actuator according to one of Claims 1 to 3, **characterized in that**, in the case of an axial movement of the axially movable component in the direction of the stop washer (1), a needle bearing (2) which is arranged in the axial direction between the stop washer (1) and the stop spring (3) comes into contact with the stop washer (1).

5. Actuator according to Claim 4, **characterized in that** a further axial movement of the axially movable component in the direction of the stop washer (1) after the stop washer (1) and the needle bearing (2) come into contact brings about a deflection of the stop spring (3).

6. Actuator according to one of Claims 1 to 5, **characterized in that** the stop spring (3) is a cup spring or compression coil spring or tubular spring or leaf spring.

7. Actuator according to one of Claims 1 to 6, **characterized in that** a prestressing spring (8) is arranged in series or in parallel with the stop spring (3) .

8. Actuator according to one of Claims 1 to 7, **characterized in that** a stop sleeve (14) is arranged within a stop housing (13) in an operative connection with the stop spring (3) in order to limit the compression of the stop spring (3).

9. Actuator according to Claim 4 and one of Claims 5 to 8, **characterized in that**, in the case of the stop washer (1) bearing against the needle bearing (2), decoupling of the rotational movement between the spindle (6) and the planetary rollers (4) can take place.

10. Method for determining a reference position of an axially movable component of an actuator having a planetary roller spindle drive (PWG), in particular for the actuation of a clutch of a vehicle by means of an axially movable piston, comprising the following steps:
a. measurement of a drive moment which is introduced into the actuator and a resistance moment which is caused by way of deformation of a stop spring (3),
b. detection of the rotary angle of the spindle (6) by means of an angle sensor (7) which is arranged at an axial end of the spindle (6),
c. detection of the equilibrium point between an introduced drive moment and a resistance moment which is caused by way of deformation of the stop spring,
it being possible for steps a to c to take place in any desired sequence or at the same time.

## Revendications

1. Actionneur avec un mécanisme à broche filetée à roulement à satellites (PWG), en particulier pour l'actionnement d'un embrayage d'un véhicule au moyen d'un piston mobile axialement, dans lequel plusieurs satellites (4) sont en prise avec une broche (6), lesquels s'engrènent avec une couronne de train planétaire (5) entourant les satellites (4), dans lequel les satellites (4) s'étendent parallèlement à l'axe par rapport à la broche (6) et sont positionnés dans un porte-satellites de manière rotative autour de leur propre axe longitudinal, et dans lequel l'actionneur présente au moins un élément mobile axialement pour la réalisation d'un mouvement de débrayage, lequel est soit la broche (6), soit un carter du mécanisme (10), et dans lequel des moyens pour la détermination d'une position de référence de l'élément mobile axialement sont intégrés, et dans lequel les moyens pour la détermination de la position de référence de l'élément mobile axialement comprennent en outre un ressort de butée (3) et un capteur d'angle (7) pour la détermination d'une modification d'angle de la broche (6).

2. Actionneur selon la revendication 1, **caractérisé en ce qu'**une rondelle de butée (1) est disposée dans une position, laquelle est fixée en direction axiale par rapport à l'élément immobile axialement.

3. Actionneur selon l'une des revendications 1 ou 2, **caractérisé en ce qu'**une rondelle de butée (1) est disposée dans une position, laquelle est fixée en direction axiale par rapport à la broche (6).

4. Actionneur selon l'une des revendications 1 à 3, **caractérisé en ce qu'**en cas de mouvement axial de l'élément mobile axialement en direction de la rondelle de butée (1), un roulement à aiguilles (2) disposé en direction axiale entre la rondelle de butée (1) et le ressort de butée (3) entre en contact avec la rondelle de butée (1).

5. Actionneur selon la revendication 4, **caractérisé en ce qu'**un nouveau mouvement axial de l'élément mobile axialement en direction de la rondelle de butée (1) provoque, après la mise en contact de la rondelle de butée (1) et du roulement à aiguilles (2), une déformation du ressort de butée (3).

6. Actionneur selon l'une des revendications 1 à 5, **caractérisé en ce que** le ressort de butée (3) est un ressort Belleville ou un ressort de compression hélicoïdal ou un ressort tubulaire ou un ressort à lame.

7. Actionneur selon l'une des revendications 1 à 6, **caractérisé en ce qu'**un ressort de prétention (8) est disposé en série ou parallèlement par rapport au ressort de butée (3).

8. Actionneur selon l'une des revendications 1 à 7, **caractérisé en ce qu'**à l'intérieur d'un boîtier de butée (13), un manchon de butée (14) est disposé en liaison active avec le ressort de butée (3) pour limiter la compression du ressort de butée (3).

9. Actionneur selon la revendication 4 et l'une des revendications 5 à 8, **caractérisé en ce qu'**en cas de butée de la rondelle de butée (1) contre le roulement à aiguilles (2), il peut y avoir un découplage du mouvement de rotation entre la broche (6) et les satellites (4).

10. Procédé pour déterminer une position de référence d'un élément mobile axialement d'un actionneur avec un mécanisme à broche filetée à roulement à satellites (PWG), en particulier pour l'actionnement d'un embrayage d'un véhicule au moyen d'un piston mobile axialement, comprenant les étapes suivantes :
a. la mesure d'un couple d'entraînement initié dans l'actionneur et d'un couple de résistance provoqué par la déformation d'un ressort de butée (3),
b. la détection de l'angle de rotation de la broche (6) au moyen d'un capteur d'angle (7) disposé sur une extrémité axiale de la broche (6),
c. la détection du point d'équilibre entre le couple d'entraînement initié et le couple de résistance provoqué par la déformation du ressort de butée,
dans lequel les étapes a à c peuvent avoir lieu dans un ordre au choix ou simultanément.
